Europäisches Patentamt

European Patent Office

Office européen des brevets

(11) Publication number: **0 404 947 A1**

(12) **EUROPEAN PATENT APPLICATION**
published in accordance with Art.
158(3) EPC

(21) Application number: 89907309.2

(22) Date of filing: 27.06.89

(86) International application number:
PCT/JP89/00639

(87) International publication number:
WO 90/00765 (25.01.90 90/03)

(51) Int. Cl.⁵: **G05B 19/405**

(30) Priority: 07.07.88 JP 169353/88

(43) Date of publication of application:
02.01.91 Bulletin 91/01

(84) Designated Contracting States:
**DE FR GB**

(71) Applicant: **FANUC LTD**
**3580, Shibokusa Aza-Komanba Oshinomura**
**Minamitsuru-gun Yamanashi 401-05(JP)**

(72) Inventor: **KAWAMURA, Hideaki**
**1375-5, Naraharamachi,Hachioji-shi**
**Tokyo 193(JP)**
Inventor: **FUJIBAYASHI, Kentaro**
**2-8-6, Nishikubo,Musashino-shi**
**Tokyo 180(JP)**
Inventor: **HOSOKAWA, Masahiko,Fanuc Dai-3**
**Vira-Karamatsu**
**3527-7,**
**Shibokusa,Oshinomura,Minamitsuru-gun**
**Yamanashi 401-05(JP)**

(74) Representative: **Brunner, Michael John et al**
**GILL JENNINGS & EVERY 53-64 Chancery**
**Laneane**
**London WC2A 1HN(GB)**

(54) **NUMERICAL CONTROLLER.**

(57) This invention relates to a numerical controller (CNC) which checks the machining program by operating a manual operation key or the like. A direction signal which determines the direction of a distribution pulse and a speed signal which determines a distribution speed are inputted from an operation board (4). Pulse distribution means (5) synchronizes the machining program processed by pre-processing means (3) with the speed signal, distributes the pulses by forward feed when the direction signal is positive and distributes them by reverse feed when the direction signal is negative. In this manner, processing of the machining program becomes easy.

MACHINING PROGRAM

PREPROCESSING MEANS

PULSE DISTRIBUTION MEANS

SERVO CONTROL SYSTEM

2

3

5

6

+
−

− + 

EDITING MEANS

4 OPERATOR PANEL

# Fig.1

DESCRIPTION

TITLE MODIFIED
see front page  NUMERICAL CONTROL APPARATUS

Technical Field

The present invention relates to a numerical control apparatus, and more particularly, to a numerical control apparatus in which a speed and direction of an execution of a pulse distribution can be controlled through a manual operation of a handle or the like.

Background Art

In numerical control apparatuses for machining complicated profiles of parts, it is first necessary to confirm no error exists such as encroachment on the profile of parts or interference of tools, etc., before actually carrying out an operation in accordance with a created machining program. Particularly, when machining a part having a complicated profile, the movement of tools at corners, etc. must be strictly checked, and therefore, the following process is first performed to check the machining program. Namely, the numerical control apparatus is operated in accordance with the created machining program, and where details need a particular check, the feed rate is lowered by using a feed rate changeover switch or the like or an interruption and execution of the machining program are repeated.

This process, however, is carried out by distributing pulses in accordance with the machining program, and accordingly, the direction of an execution of the pulse distribution is limited to a feed direction determined by the machining program, i.e., the forward feed direction. Therefore, if an error exists in the program, the process must be interrupted, reset, and restarted from the beginning of the program after the program is corrected.

Disclosure of the Invention

The present invention was created in view of the above circumstances, and an object thereof is to provide a numerical control apparatus in which the execution speed and direction of processes in a machining program can be changed through a manual operation of a handle or the like.

To achieve the above object, the present invention provides a numerical control apparatus (CNC) in which a machining program is checked through an operation of a manual operation key or the like, the apparatus comprising a signal input means for providing a direction signal determining a direction of distributed pulses and a speed signal determining a distribution speed, and a pulse distribution means for carrying out a pulse distribution for a forward feed when the direction signal is positive, and a pulse distribution for a reverse feed when the direction signal is negative, in synchronism with the speed signal.

The direction signal and speed signal, which are output through the manual operation of a handle or jog feed key, are input to the pulse distribution means as pulse distribution execution signals. The pulse distribution means carries out a pulse distribution for a forward feed when the direction signal is positive, and a pulse distribution for a reverse feed when the direction signal is negative, for an amount corresponding to the number of pulses of the speed signal. Accordingly, an operator can easily change the speed and direction of the execution of the machining program by a manual operation of a handle or the like.

Brief Description of the Drawings

Fig. 1 is a diagram showing an arrangement of a numerical control apparatus according to one embodiment of the present invention; and

Fig. 2 is a diagram showing an example of a machining operation by the numerical control apparatus according to the embodiment of the invention.

Best Mode of Carrying Out the Invention

An embodiment of the present invention will be described with reference to the drawings.

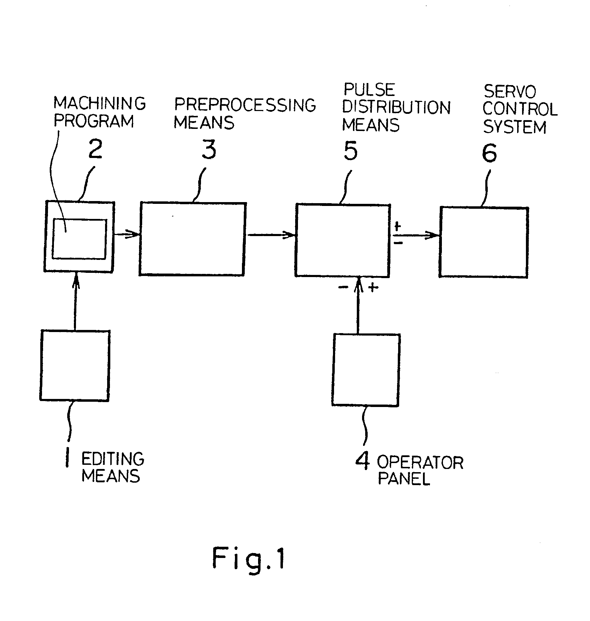

Figure 1 is a block diagram showing a numerical control apparatus according to the embodiment of the invention. In the figure, 1 denotes an editing means comprising a display device such as a CRT or the like, and a keyboard for inputting various data, etc.; 2 denotes a nonvolatile memory for storing a machining program; 3 denotes a preprocessing means for decoding G codes and carrying out an offset calculation, etc. of the machining program to obtain distribution data necessary for a pulse distribution; 4 denotes an operator panel through which a pulse distribution execution command is input and which includes a jog feed key or a manually operated handle, etc.; 5 denotes a pulse distribution means to which the distribution data calculated by the preprocessing means 3 is input and which carries out a pulse distribution in accordance with the number of pulses of a speed signal and the polarity of a direction signal, both input from the operator panel 4; and 6 denotes a servo control system which comprises a position control circuit, a servomotor, and a position detector, etc., and is adapted to move a table in accordance with the number of pulses output from the pulse distribution means 5, to thereby control the position of a workpiece.

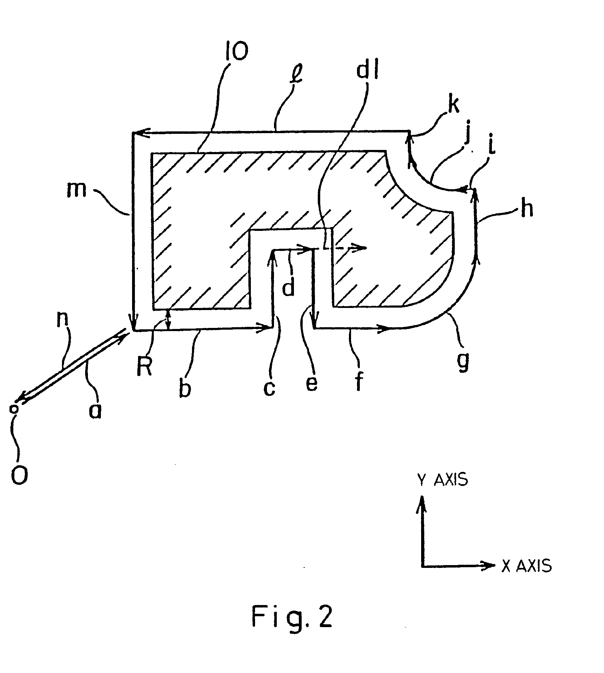

Figure 2 is a diagram showing an example of a machining operation by the numerical control apparatus according to the embodiment of the invention. In the figure, 10 denotes a profile of a workpiece, taken along an X-Y plane of a machine coordinate system; O denotes a machine zero point; and R denotes an offset amount input by an operator in accordance with the radius of a tool used. Data on the profile 10 has been input to the machining program, and thus an actual path of the tool is calculated by correcting the data of the profile 10 by the offset amount R in the preprocessing control means 3. Solid lines a to n with arrow heads represent the tool paths calculated in this manner. The direction of the arrows a to n coincides with the order of execution of paths commanded by the machining program. Namely, the sequence of the machine zero point and the following paths a, b, c, d, e, ... and n coincides with the order of execution commanded by the machining program.

The handle is adapted, by a conventional technique, to generate a pulse signal by which the amount and direction of a rotation thereof can be determined. Accordingly, when the handle is manually rotated in a positive direction (clockwise), the pulse distribution means 5 carries out a forward feed in accordance with the amount of rotation. As the rotational speed of the handle is changed, the input rate of pulses to the pulse distribution means 5 varies, whereby the execution speed of the machining program can be changed. For example, when the machining state of the tool path d is to be closely checked, the rotational speed of the handle may be slowed at this path, thus facilitating the confirmation.

The pulse distribution means 5 discriminates the direction of rotation of the handle, and when the rotational direction is opposite to the direction commanded by the machining program, outputs pulses having a reversed distribution order, to follow the paths calculated by the preprocessing control means 3. Thus, when an error exists, for example, in the machining process d of the program so that a path indicated by dotted arrow d1 will be machined after the process d, the handle is rotated in a negative direction (counterclockwise) to distribute pulses in the reverse direction, and accordingly, the tool can be returned to the start point of the path d. Then the machining program is corrected and the machining is restarted, whereby the machining can be properly carried out following the end point of the path d and then the path e, and thus errors in the machining program can be easily corrected during the execution.

When using the jog feed key, since a plurality of keys for a manual feed operation are usually provided for feeding the X, Y and Z axes, etc. in the negative and positive directions, the keys for a desired axis may be selected and used. Here, it is assumed that the keys for feeding the X axis in the positive and negative directions are used. In this case, when the positive-direction jog feed key for the X axis is pressed, execution command pulses are input to the pulse distribution means 5 in an order agreeing with that commanded by the program, whereby the machining operation is carried out with a forward feed. The machining speed can be adjusted by a jog feed rate changeover switch. When the negative-direction jog feed key for the X axis is pressed, the pulse distribution means 5 reverses the direction of the pulse distribution, as in the case of the handle, whereby the tool is fed in the reverse direction, and thus can be returned along the machining path.

As described above, according to the present invention, the pulse distribution execution signal is manually input by the handle or jog feed key, and accordingly, the operator can easily change the execution direction and speed of the machining program by operating the handle or key, whereby the machining program can be easily and safely checked.

When an error exists in the machining program, the tool is fed in the reverse direction and returned to the start point of the block concerned, and after correcting the program, the program is restarted from this position, whereby the preparation time for the machining program can be shortened.

CLAIMS

1. A numerical control apparatus (CNC) in which a machining program is checked through an operation of a manual operation key or the like, comprising:

signal input means for providing a direction signal determining a direction of distributed pulses and a speed signal determining a distribution speed; and

pulse distribution means for carrying out a pulse distribution for a forward feed when the direction signal is positive, and a pulse distribution for a reverse feed when the direction signal is negative, in synchronism with the speed signal.

2. A numerical control apparatus according to claim 1, wherein said speed signal and said direction signal are determined respectively by a rotational speed and rotational direction of a manual pulse generator.

3. A numerical control apparatus according to claim 1, wherein said speed signal and said direction signal are respectively provided by a jog feed rate switch and a jog feed key.

4. A numerical control apparatus according to claim 1, wherein the machining program is correctable at the start of a block, by carrying out a distribution in a reverse direction to the start of the block by a reverse feed in accordance with an input of the direction signal.

MACHINING PROGRAM    PREPROCESSING MEANS    PULSE DISTRIBUTION MEANS    SERVO CONTROL SYSTEM

2       3       5       6

1 EDITING MEANS

4 OPERATOR PANEL

Fig.1

Fig. 2

# INTERNATIONAL SEARCH REPORT

International Application No  PCT/JP89/00639

## I. CLASSIFICATION OF SUBJECT MATTER (if several classification symbols apply, indicate all) ⁶

According to International Patent Classification (IPC) or to both National Classification and IPC

Int. Cl⁴     G05B19/405

## II. FIELDS SEARCHED

### Minimum Documentation Searched ⁷

| Classification System | Classification Symbols |
|---|---|
| IPC | G05B19/405, 407 |

### Documentation Searched other than Minimum Documentation to the Extent that such Documents are Included in the Fields Searched ⁸

Jitsuyo Shinan Koho          1932 - 1989
Kokai Jitsuyo Shinan Koho    1971 - 1989

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| Y | JP, A, 59-165106 (Hitachi, Ltd.)<br>18 September 1984 (18. 09. 84)<br>(Family : none) | 1 - 4 |
| Y | JP, A, 63-106807 (Matsushita Electric Ind.<br>Co., Ltd.)<br>11 May 1988 (11. 05. 88)<br>(Family : none) | 1 - 4 |
| Y | JP, A, 57-153307 (Enshu Seisaku Kabushiki<br>Kaisha)<br>21 September 1982 (21. 09. 82)<br>(Family : none) | 1 - 4 |
| A | JP, A, 62-221007 (Fanuc Ltd.)<br>29 September 1987 (29. 09. 87)<br>(Family : none) | 1 - 4 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| September 12, 1989 (12. 09. 89) | September 25, 1989 (25. 09. 89) |
| International Searching Authority | Signature of Authorized Officer |
| Japanese Patent Office | |

Form PCT/ISA/210 (second sheet) (January 1985)